# EUROPÄISCHE PATENTSCHRIFT

(11) **EP 0 914 576 B1**
(45) Veröffentlichungstag und Bekanntmachung des Hinweises auf die Patenterteilung: **22.08.2001**
(21) Anmeldenummer: 98925543.5
(22) Anmeldetag: 06.05.1998
(51) Int. Cl.: F16L 23/00, F16L 23/16

(54) **SPRITZSCHUTZRING**
SPRAY PROTECTION RING
ANNEAU DE PROTECTION CONTRE LES PROJECTIONS

(30) Priorität: 28.05.1997 DE 19722283
(43) Veröffentlichungstag der Anmeldung: 12.05.1999
(73) Patentinhaber: Protec Verschlusselemente GmbH, 22113 Oststeinbek (DE)
(72) Erfinder: BRENNING, Dieter, D-21224 Rosengarten (DE)
(74) Vertreter: DIEHL GLAESER HILTL & PARTNER
(86) Internationale Anmeldenummer: EP9802666
(87) Internationale Veröffentlichungsnummer: WO9854502

(56) Entgegenhaltungen:
- DE-A- 3 146 803
- DE-A- 3 217 997
- DE-A- 3 302 139

## Beschreibung

Die Erfindung bezieht sich auf einen Spritzschutzring für Rohrflansche aus einer den Flanschspalt unter Auflage auf den Umfangsflächen der Flansche überdeckenden Spannwand für Rohrflansche aus einer den Flanschspalt unter Auflage auf den Umfangsflächen der Flansche überdeckenden Spannwand, mit einem ringförmigen, schirmartigen sich in Umfangsrichtung erstreckenden Teil mit Schlitzen, wobei die axiale Erstreckung des schirmartigen Teils vor dem Einbau leicht grösser als der Abstand zwischen den einander zugewandten Oberflächen der Flansche ist.

Spritzschutzringe an Rohrflanschen dienen der Sicherung der Umgebung, wenn eine Undichtigkeit in der Flanschverbindung auftritt. Sich in der Nähe befindendes Personal soll gegenüber der unter Druck austretenden Flüssigkeit geschützt werden, wobei zu bemerken ist, dass Flanschverbindungen ohne Spritzschutzring im Falle einer Undichtigkeit durchaus einen lebensgefährlichen Flüssigkeitsstrahl austreten lassen können.

Bekannte Spritzschutzringe (DE-OS 29 32 259 C2 und DE-U 70 37 277.9) können die angestrebte Sicherheit nicht erbringen, was zumeist darauf zurückzuführen ist, dass es nicht gelingt, der unter hohem Druck austretenden Flüssigkeit genügend Energie zu nehmen.

Die vorliegende Erfindung setzt hier an und will ein spritzfreies Austreten von unter hohem Leitungsdruck stehender Flüssigkeit aus Rohrleitungsverbindungen im Falle eines Dichtungsversagens sicherstellen.

Erreicht wird dies dadurch, dass vom Spannband her ein radial nach innen vorstehender ringförmiger Steg mit sich daran anschliessendem radial-axial verlaufenden Teil als Abstandshalter für den ringförmigen, schirmartigen sich in Umfangsrichtung erstreckenden als Ventil wirkenden Teil vorgesehen ist, so daß im Axial-Querschnitt sich die Form eines Fragezeichens ergibt, und dass der Steg und der sich daran anschliessende Teil mit einer Mehrzahl über den Umfang verteilter Schlitze ausgebildet sind, die zu einer Mehrzahl über den Umfang verteilter in Betriebslage des Spritzschutzringes praktisch geschlossener Schlitze im Schirm in Umfangsrichtung versetzt sind.

Es ist ein Spritzschutzring für Rohrflansche der eingangs genannten Art bekannt (DE-PS 31 46 803 und EP 00 80 654 A1). Bei diesem Spannband, das über die beiden Flanschblätter und den eingeschlossenen Zwischenraum gelegt wird, befindet sich zwischen den Flanschen ein ringförmiger nach radial innen hin in Umfangsrichtung offener Umlenkraum für ausströmende Flüssigkeit mit einer Prallfläche. Weiterhin ist ein nachgeschalteter Pufferraum vorgesehen, in den die Flüssigkeit sich hineinentspannt. Die beiden Räume sind über Durchbrechungen in den Zwischenwänden miteinander verbunden. Es entstehen dadurch Teilflüssigkeitsströme, die einander entgegengerichtet sind, so dass die Flüssigkeit ihre kinetische Energie stufenweisen durch Umlenkung, Aufprallen und Entspannung in einen druckfreien Raum abgibt.

Bei der vorliegenden Erfindung geht es nicht darum, Teilflüssigkeitsströme zu erzeugen, es ist auch nicht das Ziel, die kinetische Energie durch Entspannung abzubauen. Bei dem Spritzschutzring nach der vorliegenden Erfindung ist an der Innenfläche des Spannbandes ein radial nach innen vorstehender ringförmiger Steg als Abstandshalter vorgesehen, der in einen ringförmigen schirmartigen sich in Umfangsrichtung erstreckenden als Ventil wirkenden Teil übergeht, so dass im Axial-Querschnitt sich die Form eines Fragezeichens ergibt. Damit nun ein derartiges Gebilde über die Flansche gebracht und auf den Flanschdurchmesser zusammengeschoben werden kann, befindet sich über den Umfang verteilt in dem ringförmigen Steg und dem Schirm eine Vielzahl von Schlitzen, die in Betriebslage des Spritzschutzringes jedoch praktisch geschlossen sind.

Die zufolge einer Undichtigkeit zwischen den Rohrflanschen austretende Flüssigkeit trifft auf den entgegenstehenden Schirm, und nur ein kleiner Teil gelangt durch die über den Umfang verteilten Schlitze in den dahinter liegenden Raum hinein und ohne weiteres zum Spannband, ohne dass dabei irgendeine Form einer Umlenkung oder gar Prallvorgänge stattfinden oder eine Rolle spielen. Ein Teil dieser Strömung kann sich in Umfangsrichtung ausbreiten, da die Schlitze im Schirm zu denen im Steg in Umfangsrichtung zueinander versetzt sind.

Bei einer Undichtigkeit in der Flanschverbindung füllt sich zunächst der Raum radial innerhalb des Schirms mit Flüssigkeit auf, da die beiden axialen Begrenzungsflächen des Schirms mehr oder weniger fest auf den Flächen der Flansche aufliegen. Bei hinlänglich hohem Flüssigkeitsdruck hebt der Schirm von der oder den Flanschflächen ab, so dass hierdurch und durch anschliessende Wirbelvorgänge der Flüssigkeit ausreichend Energie entzogen wird.

Wesentlich für die Wirksamkeit der vorliegenden Erfindung sind diese Wirbelvorgänge und die Ventilwirkung des Schirms. Umlenkvorgänge, Aufteilung in Flüssigkeits-Teilströme, Prallverhältnisse und Entspannungsvorgänge sind nicht vorgesehen.

Die Erfindung wird nachstehend an Hand der Zeichnung beispielsweise erläutert.
- Fig. 1: zeigt eine Seitenansicht auf einen Spritzschutzring gemäss der Erfindung.
- Fig. 2: zeigt eine im vergrösserten Masstab gehaltene Detailansicht gemäss A-A der Fig. 1.

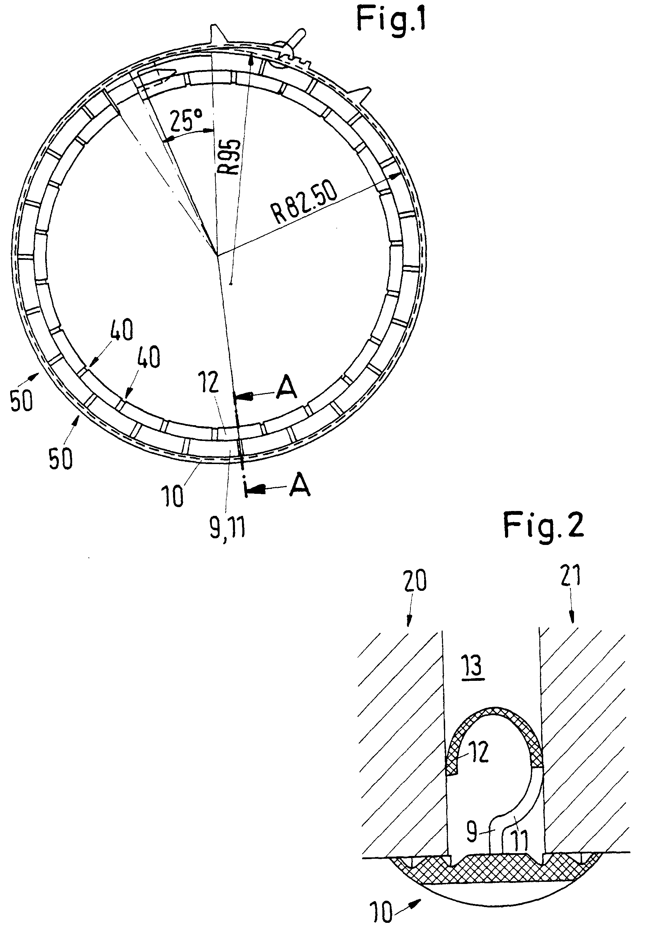

Fig. 1 zeigt eine Draufsicht auf einen Spritzschutzring in Einbaulage, wobei im oberen Bereich Teile zu erkennen sind, die dazu dienen, den Spritzschutzring, nachdem er über die Flansche gelegt worden ist, zusammenzuziehen und dabei auch permanent eine in Umfangsrichtung wirkende Kraft zu erzeugen.

Die Fig. 2 zeigt eine Querschnittsansicht und lässt zum einen ein Spannband 10 erkennen, das über die Aussenflächen von zwei einander benachbarten Flanschen 20 und 21 gelegt worden ist.

Von der Umfangs fläche des Spannbandes 10 her steht ein ringförmiger Steg 9 nach innen gerichtet vor und setzt sich in einem axial-radial gerichteten Verlängerungsteil 11 weiter nach radial innen fort. Die beiden Teile 9 und 11 sind über eine Mehrzahl von über den Umfang verteilten Schlitzen 50 aufgetrennt, so dass ein relativ grosser ringförmiger Spritzschutzring, über eine kleinere Flanschverbindung gelegt und auf dieser fest angezogen werden kann. Der Teil 11 geht in einen schirmartigen Teil 12 über, der sich zwischen den gegenüberliegenden Flächen der Flansche 20 und 21 erstreckt und zwischen diesen quasi eingespannt oder eingeklemmt ist. Der schirmartige Teil 12 schirmt den weiter innen liegenden Raum zwischen den beiden Flanschen 20, 21 nach aussen hin ab.

Im Bereich von 13 auf den Schirm auftretende Flüssigkeit wird von diesem zunächst zurückgewiesen und gelangt schliesslich über den sich öffnenden Schirm 12, der auch wie ein Ventil wirkt, in den Raum, der radial ausserhalb des Schirmes 12 liegt. Die vorhandene Flüssigkeit hat ihre Energie soweit durch den Öffnungsvorgang des Schirm- bzw. Ventilteils 12 und anschliessende Wirbelvorgänge aufgebraucht, dass kein gefährlicher Flüssigkeitsstrahl aus der Flanschverbindung austreten kann.

Auch der Schirmteil 12 ist über den Umfang verteilt mit Schlitzen 40 ausgebildet, damit der Spritzschutzring, wie bereits beschrieben, überhaupt zusammengezogen werden kann.

Die Fig. 1 lässt erkennen, dass die beiden Schlitzanordnungen zueinander versetzt sind, so dass Flüssigkeit, die zwischen den Schlitzen 40 hindurchtreten könnte, erst über eine in Umfangsrichtung ausgeführte Stömung zu den Schlitzen 50 gelangt.

## Patentansprüche

1. Spritzschutzring für Rohrflansche aus einer den Flanschspalt unter Auflage auf den Umfangsflächen der Flansche überdeckenden Spannwand, mit einem ringförmigen, schirmartigen sich in Umfangsrichtung erstreckenden Teil mit Schlitzen, wobei die axiale Erstreckung des schirmartigen Teils vor dem Einbau leicht grösser als der Abstand zwischen den einander zugewandten Oberflächen der Flansche ist, dadurch gekennzeichnet, dass vom Spannband her ein radial nach innen vorstehender ringförmiger Steg (9) mit sich daran anschliessendem radial-axial verlaufenden Teil (11) als Abstandshalter für den ringförmigen, schirmartigen sich in Umfangsrichtung erstreckenden als Ventil wirkenden Teil (12) vorgesehen ist, so dass im Axial-Querschnitt sich die Form eines Fragezeichens ergibt, und dass der Steg (9) und der sich daran anschliessende Teil (11) mit einer Mehrzahl über den Umfang verteilter Schlitze (50) ausgebildet sind, die zu einer Mehrzahl über den Umfang verteilter in Betriebslage des Spritzschutzringes praktisch geschlossener Schlitze (40) im Schirm (12) in Umfangsrichtung versetzt sind.

## Claims

1. Spray protection ring for pipe flanges, comprising a clamping strip that covers the flange gap when fitted over the circumferential surfaces of the flanges, with an annular, screen-like element provided with slits and extending in the circumferential direction, such that before fitting, the axial extension of the screen-like element is slightly larger than the distance between the flange surfaces facing one another,
**characterised in that**
projecting radially inwards from the clamping strip is provided an annular web (9) ending in an element (11) that extends radially and axially as a spacer for the annular, screen-like element (12) that runs in the direction and acts as a valve, so that in axial cross-section the shape of a question-mark is formed, and the web (9) and the element (11) connected thereto are provided with a plurality of slits (50) distributed around the circumference, the said slits being circumferentially offset relative to a phuality of slits (40) which are distributed around the circumference of the screen element (12) and are practically closed when the spray protection ring is in its operating position.

## Revendications

1. Anneau de protection contre les projections destiné à des brides de tuyaux formé d'une palplanche recouvrant la fente de la bride en appuyant sur les surfaces périphériques de la bride, avec une partie dotée de rainures, de type écran, en forme d'anneau, qui s'étend dans le sens périphérique, l'extension axiale de la partie de type écran, avant le montage, étant légèrement plus grande que l'écartement qui existe entre les surfaces tournées les unes vers les autres, caractérisé en ce qu'est prévue, à partir du collier tendeur, une traverse (9) en forme d'anneau radialement en saillie vers l'intérieur. ainsi qu'une partie (11) raccordée à cette dernière et qui s'étend de manière axiale-radiale, partie servant de barre de retenue pour la partie (12) de type écran, en forme d'anneau, qui se prolonge dans le sens périphérique et qui agit comme clapet, de telle sorte que l'on obtienne une forme de point d'interrogation selon un profil axial, en ce que la traverse (9) et la partie raccordée à cette dernière (11) sont formées d'une pluralité de rainures (50) réparties sur la périphérie, qui sont déplacées dans le sens périphérique, dans l'écran (12), vers une pluralité de rainures (40) réparties sur le pourtour et pratiquement fermées lorsque l'anneau de protection contre les projections est en état de marche.
